# Europäisches Patentamt

## European Patent Office

## Office européen des brevets

(11) Veröffentlichungsnummer: **0 163 170 B1**

## EUROPÄISCHE PATENTSCHRIFT

(45) Veröffentlichungstag der Patentschrift: **15.01.92**

(51) Int. Cl.⁵: **H05B 3/62**, C03B 5/027, H05B 3/00, F27D 11/02

(21) Anmeldenummer: **85105529.3**

(22) Anmeldetag: **07.05.85**

(54) **Glasschmelzofen mit einer Elektrodenanordnung.**

(30) Priorität: **17.05.84 DE 3418292**

(43) Veröffentlichungstag der Anmeldung:
**04.12.85 Patentblatt 85/49**

(45) Bekanntmachung des Hinweises auf die Patenterteilung:
**15.01.92 Patentblatt 92/03**

(84) Benannte Vertragsstaaten:
**FR GB IT**

(56) Entgegenhaltungen:
**CH-A- 231 685**
**DE-B- 1 124 196**
**US-A- 1 594 496**
**US-A- 2 552 395**
**US-A- 3 506 709**

**Wolfgang Trier,**
**"Glasschmelzöfen-Konstruktion und Betriebsverhalten", Springer Verlag, Berlin, 1984, Seiten 208-239**

(73) Patentinhaber: **Schott Glaswerke**
**Hattenbergstrasse 10**
**W-6500 Mainz(DE)**

(84) Benannte Vertragsstaaten:
**FR IT**

Patentinhaber: **CARL-ZEISS-STIFTUNG**
**Schott Glaswerke Hattenbergstrasse 10**
**W-6500 Mainz 1(DE)**

(84) Benannte Vertragsstaaten:
**GB**

(72) Erfinder: **Günthner, Franz**
**Tucholskyweg 46**
**W-6500 Mainz(DE)**

(74) Vertreter: **Dr. Fuchs, Dr. Luderschmidt Dipl.-Phys. Seids, Dr. Mehler Patentanwälte Abraham-Lincoln-Strasse 7**
**W-6200 Wiesbaden(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

**Beschreibung**

Die Erfindung betrifft einen Glasschmelzofen mit einer Elektrodenanordnung mit plattenförmigen Elektroden, die jeweils an einer Halterung befestigt sind, zur direkten Beheizung einer Glasschmelz.

Zur Beheizung von Glasschmelzöfen sind direkte und indirekte Heizverfahren bekannt, wobei das letztere nur bei kleinen Schmelzwannen und Hafenöfen Verwendung gefunden hat.

Die direkte Beheizung wird mittels Elektroden durchgeführt, die in die Schmelze eintauchen, und beruht auf der ionischen Leitfähigkeit der Glasschmelze, die stark von der chemischen Zusammensetzung des Glases, insbesondere von seinem Alkali- und Erdalkaligehalt abhängt.

Aus W. Trier, "Glasschmelzöfen", Springer-Verlag 1984 (S. 2O8 bis 239) ist bekannt, zur Beheizung Stab- oder Plattenelektroden in verschiedenen Ausführungen und Anordnungen zu verwenden. Üblicherweise werden zwei Plattenelektroden vertikal an gegenüberliegenden Wannenwänden angebracht.

Für die Auslegung der elektrischen Anlage ist die Kenntnis des Widerstandes der Heizstrecke von großer Bedeutung. Hierbei ist zu berücksichtigen, daß der Stromfluß von einer Elektrode zur anderen in einer räumlich ausgedehnten Weise erfolgt, wobei die Stromdichte örtlich sehr unterschiedlich sein kann.

Die Vorausbestimmung der örtlichen Stromdichteverteilung und des Stromwiderstandes ist damit ein zentrales Problem.

Für die Berechnung der Leistungsabgabe sind der Widerstand des Feuerfestmaterials (ff) und der der Glasschmelze zu berücksichtigen. Die Abnahme des elektrischen Widerstandes des ff-Material kann bei Störungen von außen zu einer lokalen Leistungsaufnahme und damit zu einer Temperatursteigerung und Zerstörung des ff-Materials führen.

Diese als thermische Instabilität bezeichnete Erscheinung, die zum Beispiel durch das Ausfallen der Elektrodenkühlung auftreten kann, nimmt mit der Stromdichte, dem Gradienten des spezifischen elektrischen Widerstandes des ff-Materials und der geometrischen Ausdehnung des betrachteten Bereiches zu.

Die thermische Instabilität im ff-Material -im Glas ist sie weniger gefährlich, da sie dort unter anderem durch Maßnahmen zur Steigerung des Glasaustausches zwischen den Elektroden verhindert werden kann - läßt bei den derzeitigen Elektrodenanordnungen und -konstruktionen die Steigerung der Schmelzleistung/Volumeneinheit in nennenswertem Maße nicht zu.

Weiterhin sind die konstruktiven Möglichkeiten durch die für die Kühlung der Elektroden benötigte Kühlleistung beschränkt, die bei einer Elektrode 2 bis 6 kW beträgt. Die Abmessungen der Elektrode sollen dabei in einem bestimmten Verhältnis zueinander stehen.

Aus der US-A-3,506,769 ist eine Glasspeiserinne zur Überführung vom geschmolzenem Glas von einem Schmelzofen zu einem Speiser bekannt. Längs der Glasspeiserinne sind eine Anzahl von Elektroden zur direkten Beheizung des geschmolzenen Glases eingelassen, die versetzt einander gegenüberliegend angeordnet sind und mit getrennten Stromversorgungseinrichtungen verbunden werden können, so daß das geschmolzene Glas in der Rinne in einer Zickzackstrecke mit (unterschiedlichen) Stromstärken beaufschlagt werden kann und so längs der Rinne die jeweils optimale Temperatur aufweist. Die Elektroden können Stäbe oder Platten sein, die einzeln in das Feuerfestmaterial der Rinne eingelassen sind, wobei die Platten in Strömungsrichtung des Glases liegend und in das ff-Material eingebettet oder in geringem Abstand parallel zu diesem angeordnet sind. Glas kann in dieser Anlage nicht geschmolzen, sondern nur bei einer bestimmten Temperatur gehalten werden. Würde diese Anlage mit höheren Stromstärken zum Schmelzen von Glas beaufschlagt werden, so würde dies (s.o.) zur Zerstörung des ff-Materials führen, da hierfür bei dieser Anordnung die erforderliche Stromdichte in den Elektroden (und ebenso die anliegende Spannung) zu groß wird.

Aus der DE-B-1 124 196 ist eine weitere Glasspeiserinne bekannt, in der zwei Elektroden zur direkten Beheizung des durchfließenden Glases angeordnet sind. Die plattenförmigen Elektroden sind dabei längs der Rinne und quer zur Strömungsrichtung des geschmolzenen Glases aufgehängt. Damit die Elektroden den Glasfluß dabei nicht zu sehr behindern, sind diese mit einer Vielzahl von Durchbrüchen oder kammähnlichen Einschnitten versehen oder sind in ihren Abmessungen so bemessen, daß über den Elektroden noch genügend Raum für das durchfließende Glas bleibt. Diese Anordnung kann nur mit geringen Stromstärken beaufschlagt werden, da sonst die oben beschriebene Zersetzung des ff-Materials einsetzt. Bei Speiserinnen ist eine höhere Stromdichte auch nicht erforderlich, da das Glas schon geschmolzen ist; der Stromfluß im Glas dient vielmehr zur Homogenisierung des Glasflusses hinsichtlich dessen Temperatur bzw. Viskosität. Die Elektroden sollen daher nicht einen besonders hohen, sondern einen möglichst gleichmäßigen Stromfluß bzw. einen den örtlichen Gegebenheiten der Rinne angepaßten Stromfluß erlauben, ohne den Glasfluß dabei zu sehr zu beeinträchtigen.

Die CH-A-231 685 zeigt einen Glasschmelzofen mit plattenförmigen Elektroden, die geeignet sind, die Zersetzung des ff-Materials zu verringern und außerdem bei Bedarf ohne Abbruch des Schmelzbetriebes ausgetauscht werden können. Die hier verwendeten Elektroden sind dabei nicht in das ff-Material eingebaut, sondern hängen von oben an einer Querstange befestigt in den Ofen hinein. Die Querstange liegt dabei rechts und links auf dem ff-Material auf und kann mittels Wasserdurchfluß gekühlt werden. Da bei dieser Anordnung das (kalte) Glasrohmaterial von oben über die Elektroden geschüttet wird, unterliegen diese einem schwankenden Temperaturgradienten, der zu einer Verformung der Elektrodenplatten führen kann. Dies kann zwar durch Einsägungen der Platte verringert werden, bei einem geringen Plattenabstand, der für hohe Stromdichten erforderlich ist, ist die Gefahr eines Kurzschlusses weiterhin gegeben, zumal die Elektrodenplatten durch nachgefülltes Rohmaterial auch verschoben werden können.

Höhere Stromdichten lassen sich mit einer Elektrodenanordnung gemäß der US-A-2,552,395 erzielen, in der eine Vielzahl von Elektrodenstäben versetzt und einander gegenüberliegend in zwei gegenüberliegende Seitenwände eines Schmelzofens eingelassen sind. Aber auch hier ist einer weiteren Erhöhung der Stromdichte eine Grenze gesetzt, da sonst wieder die Zerstörung des ff-Materials zunimmt. Hinzu kommt, daß hier bei einem Austausch der Elektroden der ganze Ofen leergefahren werden muß, da die Elektroden in die Ofenwand eingelassen sind.

Aufgabe der vorliegenden Erfindung ist daher eine Elektrodenanordnung, mit der eine Leistungssteigerung gegenüber herkömmlichen Elektroden und deren Anordnung erreicht wird.

Das Ziel wird mit einer Elektrodenanordnung gemäß den Ansprüchen erreicht.

Der erfindungsgemäßen Elektrodenanordnung liegen folgende Überlegungen zugrunde.

Die Gesamtleistung eines Heizkreises ist

$$
\begin{aligned}
N_{Ges} &= N_{Glas} + N_{ff} \\
&= R_{Glas} I^2_{Glas} + R_{ff} I^2_{ff} \\
&= U^2 \left( \frac{1}{R_{Glas}} + \frac{1}{R_{ff}} \right)
\end{aligned}
$$

wobei

$$
R = \frac{\zeta \cdot \ell}{F}
$$

ist. Mit $\zeta$ wird der spezifische Widerstand, mit $\ell$ die Länge und mit $F$ die Fläche des Glases bzw. des ff-Materials bezeichnet.

Je kleiner $R_{Glas}$, d.h. je kleiner $\ell_{Glas}$ und je größer $F_{Glas}$ und je größer $R_{ff}$, d.h. je größer $\ell_{ff}$ und je kleiner $F_{ff}$, umso größer wird der Anteil, der von der Gesamtleistung dem Glas zugeführt wird, und umso mehr wird das ff-Material entlastet.

Die Leistung/Volumeneinheit Schmelze kann viel größer als zur Zeit üblich sein, ohne daß dabei das ff-Material gefährdet wird, d.h. eine thermische Instabilität eintritt. Unter den gegebenen Bedingungen wird das am besten dadurch erreicht, daß die Verhältnisse $\ell_{ff}/\ell_{Glas}$ und $F_{Glas}/F_{ff}$ möglichst groß werden. Am stärksten kann dabei das Längenverhältnis variiert werden.

Die erfindungsgemäße Elektrodenanordnung wird nachstehend an Hand der Zeichnung näher erläutert, in der beispielhafte Ausführungsformen dargestellt sind.

Es zeigen

Fig.1 Vorderansicht der erfindungsgemäßen Elektrodenanordnung

Fig. 2 Draufsicht der Elektrodenanordnung

Fig. 3 vertikaler Schnitt eines Glasofens mit Elektrodenanordnung

Fig. 4 Schnitt längs der Linie IV-IV der Fig. 3

Fig. 5 vertikaler Teilschnitt eines Glasofens mit einer weiteren Elektrodenanordnung

Fig. 6 Schnitt längs der Linie VI-VI der Fig. 5

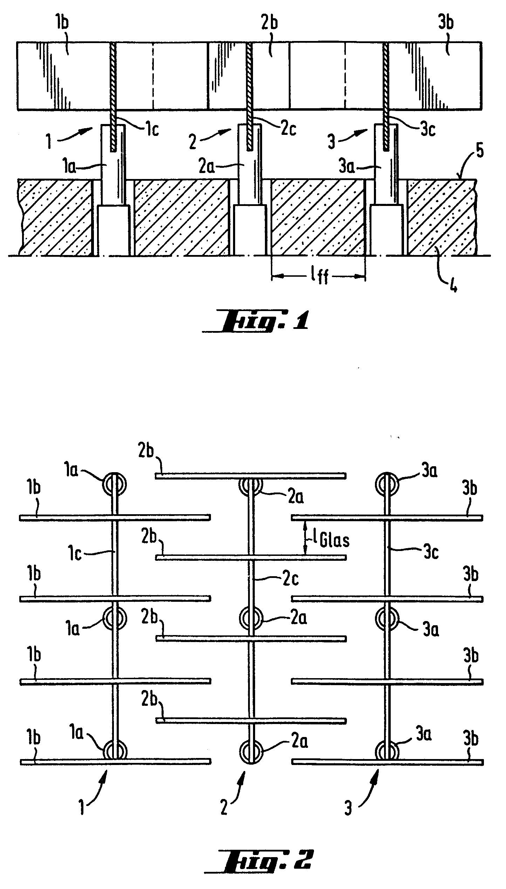

In Fig. 1 ist die Vorderansicht der Elektroden 1, 2 und 3 dargestellt, wobei die Halterungen 1a, 2a und 3a im Feuerfest-Material 4 am Boden 5 des Glasbeckens befestigt sind. Die Elektrodenplatten 1b, 2b und 3b sind jeweils parallel zu den Halterungen 1a, 2a und 3a angeordnet.

Fig. 2 zeigt die Elektrodenanordnung in Draufsicht. Die Elektroden 1, 2 und 3 bestehen aus je vier Elektrodenplatten 1b, 2b bzw. 3b, und je einem Verbindungselement 1c, 2c bzw. 3c, die an je drei Halterungen 1a, 2a bzw. 3a befestigt sind. Die Elektrodenplatten 1b, 2b bzw. 3b sind jeweils im Abstand parallel zueinander angeordnet. Die Halterungen 1a, 2a, bzw. 3a sind in einer Reihe angeordnet und durch die Verbindungselemente 1c, 2c bzw. 3c, die ebenfalls aus Platten bestehen und die Elektrodenplatten tragen, verbunden. Die Verbindungselemente benachbarter Elektroden liegen parallel nebeneinander.

Die Elektrodenplatten der einen Elektrode 1 sind nun den halben Plattenabstand gegenüber denen der Nachbarelektroden 2 versetzt, so daß die Elektrodenplatten 1b jeweils in den Zwischenraum der Elektrodenplatten 2b der benachbarten Elektrode 2 hineinragen. Gleiches gilt für die Elektrode 3.

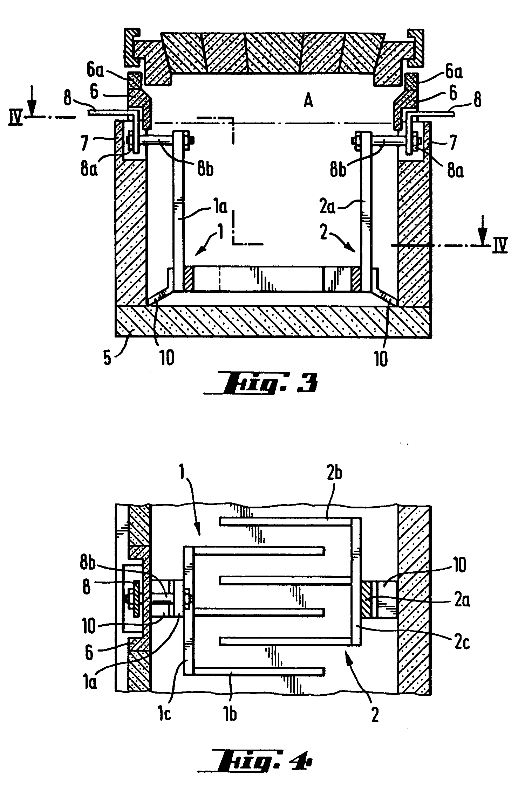

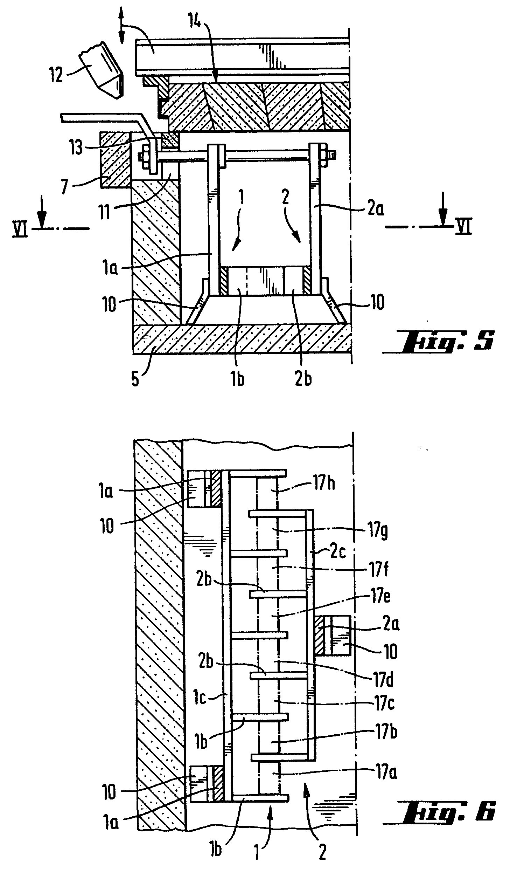

Fig. 3 und Fig. 4 zeigen einen vertikalen Schnitt durch einen Glasofen, wobei die Elektroden 1, 2 von oben über den Beckenrand in das Glasbecken eingeführt werden. Dies hat den Vorteil, daß die Elektroden bei mit geschmolzenem Glas gefüllten, heißen Becken ausgewechselt werden können. Dazu werden die Steine 6, 6a (Fig.3) entfernt bzw. das Gewölbe 14 (Fig.5) angehoben und der Stein 13 entfernt.

Die Halterungen 1a, 2a sind am Rand 7 des Glasbeckens angeordnet.

Die Elektrodenhalterungen können entweder auf gegenüberliegenden Seiten (Fig. 3 und 4) oder auf der gleichen Seite (Fig. 5 und 6) angeordnet sein. Die Elektroden können frei im Glas hängen oder durch Molybdänbleche 10 am Boden 5 des Beckens abgestützt werden. Die Elektrodenplatten 1b, 2b werden durch Distanzstücke 17a bis 17h (Fig. 6 ) gegeneinander abgestützt, so daß die Abstände der Elektrodenplatten 1b, 2b beim Einsetzen genau eingehalten werden. Die Distanzstücke 17 bestehen aus einem temperaturwechselfesten Material, das beim Abschmelzen im Glas nicht stört und aufschwimmt, wenn es sich von den Elektrodenplatten löst.

Die Halterungen 1a, 2a, die Befestigungsschrauben 8a und die Verbindungsbolzen 8b bestehen aus Molybdän, befinden sich unterhalb der Glasspiegellinie A und werden vom Glas ganz umspült. Das Außenteil 8 der Halterung besteht aus einem hitze- und zunderbeständigen Material.

Damit an der Stelle 11 (Fig.5) die Glasströmung und der Glasaustausch zwischen dem inneren und äußeren Teil des Beckens möglichst klein wird, wird mittels der Düsen 12 Luft herangeführt und gekühlt.

**Patentansprüche**

1. Glasschmelzofen mit folgenden Merkmalen:
   1. einem Rand (7) und einem Boden (5) aus Feuerfestmaterial,
   2. mindestens zwei Elektroden (1, 2), die
   2.1 im Innenraum des Glasschmelzofens angeordnet sind und wobei
   2.2 jede Elektrode (1, 2)
   2.2.1 mindestens zwei Elektrodenplatten (1b; 2b),
   2.2.2 ein Verbindungselement (1c, 2c), das
   2.2.2.1 die Elektrodenplatten einer Elektrode mechanisch,
   2.2.2.2 im Abstand, und
   2.2.2.3 parallel zueinander hält, sowie
   2.2.2.4 elektrisch miteinander verbindet, und
   2.2.3 mindestens eine Halterung (1a, 2a) aufweist, die
   2.2.3.1 die Elektrodenanordnung aus Elektrodenplatten und Verbindungselement elektrisch leitend mit dem Äußeren des Glasschmelzofens verbindet, wobei
   3. an jeder Elektrode (1, 2) je zwei benachbarte Elektrodenplatten (1b; 2b) zusammen mit dem diese benachbarten Elektrodenplatten verbindenden Teil des zugehörigen Verbindungselementes (1c, 2c) an drei Seiten einen Zwischenraum umschließen, in den
   4. eine der Elektrodenplatten (2b; 1b) von einer der anderen Elektroden (2, 1) hineinragt.

2. Glasschmelzofen nach Anspruch 1, dadurch gekennzeichnet, daß die in den Zwischenraum hineinragende Elektrodenplatte (2B; 1B) von den den Zwischenraum umschließenden benachbarten Elektrodenplatten (1B; 2B) gleich beabstandet ist.

3. Glasschmelzofen nach einem der Ansprüche 1 oder 2, dadurch gekennzeichnet, daß bei einer Vielzahl von Halterungen (1a, 2a) diese an jeder Elektrode (1, 2) in je einer Reihe angeordnet und mittels des zugehörigen Verbindungselementes (1c, 2c) verbunden sind.

4. Glasschmelzofen nach einem der Ansprüche 1 bis 3, dadurch gekennzeichnet, daß die Verbindungselemente (1c, 2c) aus Platten bestehen.

**5.** Glasschmelzofen nach einem der Ansprüche 1 bis 4, dadurch gekennzeichnet, daß die Halterungen (1a, 2a) am Boden (5) des Glasschmelzofen angeordnet sind.

**6.** Glasschmelzofen nach einem der Ansprüche 1 bis 4, dadurch gekennzeichnet, daß die Halterungen (1a, 2a) am Rand (7) des Glasschmelzofen angeordnet sind und in die Glasschmelze eintauchen.

**7.** Glasschmelzofen nach Anspruch 6, dadurch gekennzeichnet, daß die Halterungen (1a, 2a) auf gegenüberliegenden Seiten des Glasschmelzofen angeordnet sind.

**8.** Glasschmelzofen nach Anspruch 6, dadurch gekennzeichnet, daß die Halterungen (1a, 2a) auf der gleichen Seite des Glasschmelzofen angeordnet sind.

**9.** Glasschmelzofen nach einem der Ansprüche 6 bis 8, dadurch gekennzeichnet, daß am Boden (5) des Glasschmelzofens zur Abstützung der Elektroden (1, 2) Molybdänbleche (10) angeordnet sind.

**10.** Glasschmelzofen nach einem der Ansprüche 6 bis 9, dadurch gekennzeichnet, daß am Rand (7) des Glasschmelzofens Luftdüsen (12) zur Kühlung des geschmolzenen Glases im Bereich (11) der Durchführung der Halterungen (1a, 2a) nach außen angeordnet sind.

**11.** Glasschmelzofen nach einem der Ansprüche 1 bis 8, dadurch gekennzeichnet, daß zwischen den Elektrodenplatten (1b, 2b) Distanzstücke (17a bis 17h) angeordnet sind.

**Claims**

**1.** A glass melting furnace with the following features:
1. an edge (7) and a base (5) made of refractory material,
2. at least two electrodes (1, 2)
2.1 which are arranged in the interior of the glass melting furnace and wherein
2.2 each electrode (1, 2) comprises
2.2.1 at least two electrode plates (1b; 2b)
2.2.2 a connecting element (1c, 2c) by which
2.2.2.1 the electrode plates of an electrode are retained mechanically,
2.2.2.2 at a distance and
2.2.2.3 in parallel to one another and
2.2.2.4 are electrically connected to one another and
2.2.3 at least one retainer (1a, 2a) by which
2.2.3.1 the electrode arrangement comprising the electrode plates and the connecting element are electrically conductively connected to the exterior of the glass melting furnace, wherein
3. on each electrode (1, 2) two respective adjacent electrode plates (1b; 2b), together with that part of the associated connecting element (1c, 2c) which connects these adjacent electrode plates, enclose, on three sides, a space into which
4. one of the electrode plates (2b; 1b) of one of the other electrodes (2, 1) projects.

**2.** A glass melting furnace as claimed in Claim 1, characterised in that the electrode plate (2b; 1b) which projects into the space is arranged at an equal distance from the adjacent electrode plates (1b; 2b) which enclose the space.

**3.** A glass melting furnace as claimed in one of Claims 1 or 2, characterised in that in the event that a plurality of retainers (1a, 2a) are provided, these are arranged in a respective row on each electrode (1, 2) and are connected by means of the associated connecting element (1c, 2c).

**4.** A glass melting furnace as claimed in one of Claims 1 to 3, characterised in that the connecting elements (1c, 2c) consist of plates.

**5.** A glass melting furnace as claimed in one of Claims 1 to 4, characterised in that the retainers (1a, 2a) are arranged on the base (5) of the glass melting furnace.

**6.** A glass melting furnace as claimed in one of Claims 1 to 4, characterised in that the retainers (1a, 2a) are arranged at the edge (7) of the glass melting furnace and are immersed in the glass melt.

7. A glass melting furnace as claimed in Claim 6, characterised in that the retainers (1a, 2a) are arranged on opposite sides of the glass melting furnace.

8. A glass melting furnace as claimed in Claim 6, characterised in that the retainers (1a, 2a) are arranged on the same side of the glass melting furnace.

9. A glass melting furnace as claimed in one of Claims 6 to 8, characterised in that molybdenum metal sheets (10) are arranged on the base (5) of the glass melting furnace to support the electrodes (1, 2).

10. A glass melting furnace as claimed in one of Claims 6 to 9, characterised in that air jets (12) are arranged at the edge (7) of the glass melting furnace for the purpose of cooling the molten glass in the region (11) of the passage of the retainers (1a, 2a) to the exterior.

11. A glass melting furnace as claimed in one of Claims 1 to 8, characterised in that spacers (17a to 17h) are arranged between the eletrode plates (1b, 2b).

**Revendications**

1. Four de fusion de verre, ayant les caractéristiques suivantes:
   1. un bord (7) et un fond (5) en matériau réfractaire;
   2. au moins deux électrodes (1, 2) qui
   2.1 sont agencées dans l'espace intérieur du four de fusion de verre,
   2.2 chaque électrode (1, 2) présentant
   2.2.1 au moins deux plaques (1b; 2b),
   2.2.2 un élément de liaison (1c, 2c) qui maintient mécaniquement
   2.2.2.1 les plaques d'une électrode
   2.2.2.2 à distance les unes des autres et
   2.2.2.3 parallèlement les unes aux autres et les relie électriquement les unes aux autres, et
   2.2.3 présentant au moins un support (1a, 2a), lequel
   2.2.3.1 établit une liaison électroconductrice entre l'extérieur du four de fusion de verre et l'agencement d'électrode constitué par les plaques d'électrode et l'élément de liaison;
   3. la partie de l'élément de liaison (1c, 2c) reliant deux plaques voisines (1b; 2b) sur chaque électrode (1, 2) entoure, en combinaison avec celles-ci, un espace intermédiaire sur trois côtés, et
   4. l'une des plaques (2b; 1b) de l'une des autres électrodes (2, 1) pénètre dans ledit espace intermédiaire.

2. Four de fusion de verre selon revendication 1, caractérisé par le fait que la plaque d'électrode (2b; 1b) pénétrant dans l'espace intermédiaire est équidistante des plaques d'électrode (1b; 2b) voisines entourant l'espace intermédiaire.

3. Four de fusion de verre selon l'une des revendications 1 ou 2, caractérisé par le fait que, dans le cas d'une pluralité de supports (1a, 2a), ceux-ci sont disposés à chaque fois en une ligne sur chaque électrode (1, 2) et sont reliés au moyen de l'élément de liaison y relatif (1c, 2c).

4. Four de fusion de verre selon l'une des revendications 1 à 3, caractérisé par le fait que les éléments de liaison (1c, 2c) sont constitués par des plaques.

5. Four de fusion de verre selon l'une des revendications 1 à 4, caractérisé par le fait que les supports (1a, 2a) sont agencés au fond du four de fusion de verre.

6. Four de fusion de verre selon l'une des revendications 1 à 4, caractérisé par le fait que les supports (1a, 2a) sont agencés sur le bord (7) du four de fusion de verre et plongent dans le verre en fusion.

7. Four de fusion de verre selon revendication 6, caractérisé par le fait que les supports (1a, 2a) sont disposés sur des cotés opposés du four de fusion de verre.

**8.** Four de fusion de verre selon revendication 6, caractérisé par le fait que les suppports (1a, 2a) sont disposés du même côté du four de fusion de verre.

**9.** Four de fusion de verre selon l'une des revendications 6 à 8, caractérisé par le fait que des tôles de molybdène (10) sont agencées sur le fond du four de fusion de verre, pour soutenir les électrodes (1, 2).

**10.** Four de fusion de verre selon l'une des revendications 6 à 9, caractérisé par le fait que des ajutages d'air (12) sont agencés au bord (7) du four de fusion de verre, pour refroidir le verre fondu, dans la région (11) de la traversée des supports (1a, 2a) vers l'extérieur

**11.** Four de fusion de verre selon l'une des revendications 1 à 8, caractérisé par le fait que des pièces d'écartement (17a à 17h) sont agencées entre les plaques d'électrode (1b, 2b).

**Fig. 1**

**Fig. 2**

*Fig. 3*

*Fig. 4*

*Fig. 5*

*Fig. 6*